# FASCICULE DE BREVET EUROPEEN

(11) **EP 1 068 978 B1**
(45) Date de publication et mention de la délivrance du brevet: **28.05.2003**
(21) Numéro de dépôt: 00460041.7
(22) Date de dépôt: 04.07.2000
(51) Int. Cl.: B60K 6/04

(54) **Boîte de vitesses mécanique en ligne, pour véhicule à propulsion hybride**
Mechanisches Schaltgetriebe für ein Hybridfahrzeug
Mechanical gearbox for hybrid vehicle

(30) Priorité: 13.07.1999 FR 9909308
(43) Date de publication de la demande: 17.01.2001
(73) Titulaire: Peugeot Citroen Automobiles SA, 92200 Neuilly sur Seine (FR)
(72) Inventeur: Petiot, Jean-Paul, 91460 Marcoussis (FR)
(74) Mandataire: Le Faou, Daniel

(56) Documents cités:
- EP-A- 0 845 618
- DE-A- 3 230 121
- FR-A- 2 699 127
- GB-A- 993 185
- JP-A- 10 217 779
- US-A- 5 603 242

## Description

La présente invention concerne une boîte de vitesses mécanique en ligne, pour un véhicule à propulsion hybride, selon le préambule de la revendication 1 (connue du document JP-A-102117779).

Par l'expression «propulsion hybride», on entendra dans la présente description, et dans les revendications qui suivent, une propulsion qui est réalisée à partir d'un moteur thermique et/ou d'un moteur électrique, le véhicule étant équipé de ces deux types de moteur.

La boîte de vitesses qui fait l'objet de l'invention est du type comportant des lignes primaire et secondaire parallèles, à savoir une ligne primaire motrice et une ligne secondaire réceptrice du mouvement, laquelle entraîne un différentiel qui commande à son tour les roues motrices du véhicule.

L'objectif de l'invention est de proposer une boîte de vitesses du type ci-dessus indiqué, qui soit d'une conception relativement simple et extrêmement compacte, et qui permette de développer un couple et un rapport de démultiplication adaptés aux conditions de circulation du véhicule, en particulier à la vitesse voulue, ceci en utilisant comme source motrice l'un au moins des deux moteurs ou les deux.

Cet objectif est atteint, conformément à l'invention, grâce au fait que :
- la ligne primaire est constituée d'un arbre menant principal entraîné en rotation par le moteur thermique via un embrayage et d'un arbre menant auxiliaire tubulaire qui entoure coaxialement l'arbre menant principal et qui est entraîné par le moteur électrique, ces deux arbres étant mutuellement libres en rotation ;
- l'arbre menant principal porte au moins une paire de pignons de diamètres différents, dont il est solidaire en rotation ;
- l'arbre menant auxiliaire porte un pignon dont il est solidaire en rotation ;
- la ligne secondaire comprend un arbre mené qui, d'une part, porte un pignon dont il est solidaire en rotation et qui est en prise avec ledit pignon de l'arbre menant auxiliaire, d'autre part, porte une première paire de pignons fous qui sont chacun en prise avec l'un des pignons de l'arbre menant principal, un baladeur permettant de solidariser sélectivement en rotation l'un de ces pignons fous avec l'arbre mené, ainsi qu'une seconde paire de pignons fous, dits pignons de sortie, de diamètres différents ;
- le différentiel porte deux couronnes de diamètres différents, qui sont en prise chacune avec l'un desdits pignons de sortie, un baladeur permettant de solidariser sélectivement l'un des deux pignons de sortie avec ledit arbre mené .

Avantageusement, le pignon porté par l'arbre mené est disposé entre les deux paires de pignons fous.

D'autres caractéristiques et avantages de l'invention apparaîtront de la description qui va suivre, en référence au dessin annexé, qui représente un mode , de réalisation préféré de l'objet de cette invention.

Sur ce dessin :

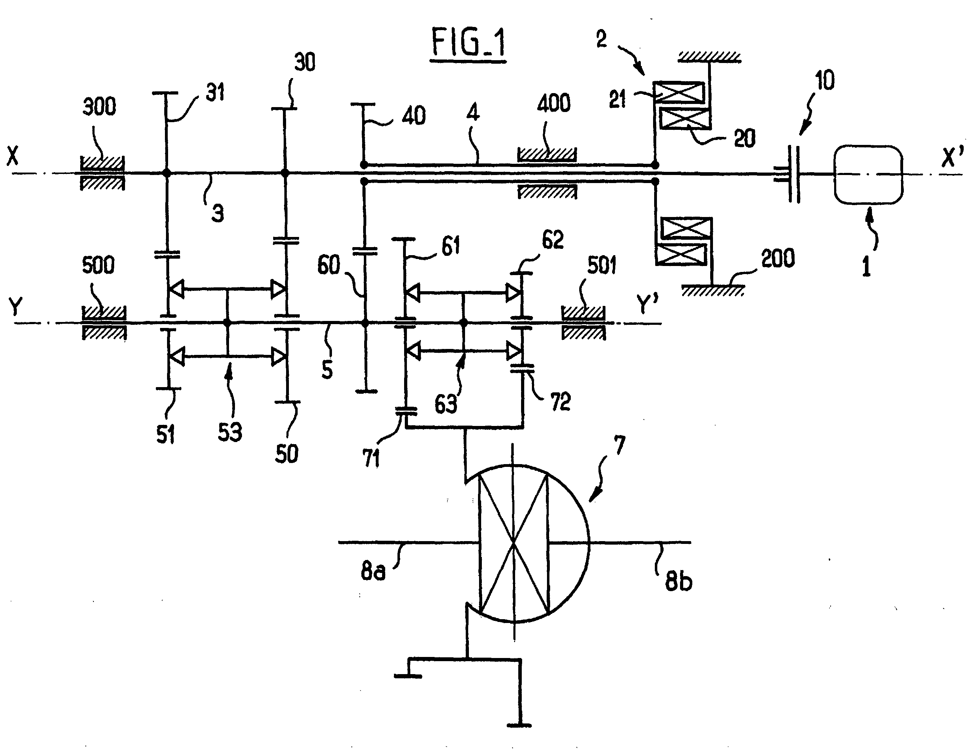

la figure 1 (figure unique) est une vue générale, très schématique, de la boîte de vitesses.

On y a désigné par les références **XX'** et **YY'** les lignes primaire et, respectivement, secondaire de la boîte de vitesses mécanique en ligne. Il s'agit d'une boîte à quatre vitesses thermiques et deux vitesses électriques, cette solution n'étant qu'un exemple de combinaison parmi de nombreuses possibles.

Ces deux lignes sont parallèles, disposées à proximité l'une de l'autre.

Dans l'exemple illustré, la ligne **XX'** est placée au-dessus de la ligne **YY'**.

Le moteur thermique, qui est par exemple un moteur à quatre temps, à essence ou du type Diesel, est référencé 1.

Le moteur électrique est référencé 2, son stator (central) et son rotor (annulaire) présentant des bobinages référencés respectivement 20 et 21.

La ligne primaire **XX'** est constituée d'une paire d'arbres, dits menants, à savoir un arbre principal 3 et un arbre auxiliaire tubulaire 4.

L'arbre 3 est entraîné en rotation par le moteur thermique 1, ceci par l'intermédiaire d'un embrayage 10 de type connu.

Dans sa portion d'extrémité qui est opposée à l'extrémité comportant l'embrayage 10, cet arbre 3 possède une paire de pignons de diamètres différents 30, 31.

L'axe du moteur électrique 2 coïncide avec la ligne **XX'**, le rotor 21 entourant le stator 20 qui lui-même entoure coaxialement l'arbre 3 qui le traverse.

Avantageusement, le stator 20 est solidaire d'une partie fixe 200 constitutive du carter de l'embrayage 10.

Le moteur électrique est donc contenu dans ce carter.

L'arbre creux auxiliaire 4 est traversé par l'arbre principal 3 et est libre en rotation par rapport à ce dernier.

L'arbre 4 est notablement plus court que l'arbre 3, celui-ci dépassant largement à ses deux extrémités, d'un côté par la portion équipée de l'embrayage 10, de l'autre par la portion munie des pignons 30, 31.

L'arbre tubulaire 4 est solidaire à l'une de ses extrémités du rotor 21.

Dans sa portion d'extrémité opposée, cet arbre 4 porte un pignon 40.

Ce dernier est immobilisé sur l'arbre 4, aussi bien en rotation qu'en translation.

Des organes appropriés, tels que des paliers de roulement référencés 300, 400, assurent le guidage en rotation des deux arbres 3, 4 de la ligne primaire.

Dans l'exemple illustré, le palier 300 réalise le guidage d'une extrémité de l'arbre 3, du côté opposé à l'embrayage, tandis que le palier 400 assure le guidage de l'arbre tubulaire 4 dans sa portion comprise entre le moteur 2 et le pignon 40. L'arbre 4 est lui-même guidé en rotation sur l'arbre central 3, si bien que les deux arbres 3, 4 sont parfaitement guidés en rotation.

Des moyens appropriés, non représentés, assurent également l'immobilisation axiale de chacun de ces deux arbres.

La ligne secondaire **YY'** comprend un arbre 5, dit mené.

Des paliers d'extrémité appropriés 500, 501 assurent le guidage en rotation de cet arbre 5.

L'arbre 5 porte, en sa partie centrale, un pignon 60 dont il est solidaire aussi bien en rotation qu'en translation. Le pignon 60 engrène avec le pignon 40 précité.

De part et d'autre du pignon 60 est montée une paire de pignons 50-51 et 61-62.

Les pignons de chaque paire sont de diamètres différents.

Les pignons 50, 51 sont en prise, respectivement, avec les pignons 30, 31 précités.

Les pignons 50, 51 sont normalement montés fous sur l'arbre 5.

Cependant, il est prévu un baladeur 53, interposé entre ces deux pignons, et solidaire en rotation de l'arbre 5.

Par déplacement du baladeur 53, dans un sens ou dans l'autre, suivant la direction longitudinale **YY'**, il est possible de solidariser en rotation ce baladeur 53 et, corrélativement, l'arbre 5, avec l'un des deux pignons 50 ou 51, ceci de manière sélective.

De la même manière, les pignons 61, 62 - appelés pignons de sortie - sont tous deux montés fous sur l'arbre 5 ; un baladeur 63 disposé entre les deux pignons permet de solidariser sélectivement l'un ou l'autre d'entre eux avec cet arbre 5.

Les pignons 30, 51 et 60 ont sensiblement le même diamètre.

Les pignons 31, 40, 50 et 61 ont également sensiblement le même diamètre, supérieur au diamètre des pignons précédents.

Bien entendu, la somme des rayons de deux pignons mutuellement en prise correspond à la valeur d'entraxe des deux lignes **XX'**, **YY'**.

Le pignon 62 a un diamètre notablement plus petit que celui des autres pignons.

De manière connue, le différentiel 7 entraîne deux demi-essieux 8a, 8b, qui portent chacun l'une des roues motrices du véhicule.

Le différentiel possède deux couronnes 71, 72, qui engrènent respectivement avec les pignons 61, 62 précités.

La denture de la couronne 72 est, à cet effet, sensiblement plus grande que la denture de la couronne 71, et un rapport de démultiplication très différent peut ainsi être obtenu entre l'arbre mené 5 et le différentiel 7, selon qu'il est entraîné par le pignon 62 ou par le pignon 61 - ceci en fonction de la position du baladeur 63 -.

Le fonctionnement de cette boîte de vitesses est expliqué ci-après.

Au démarrage du véhicule, on pilote le débrayage de l'embrayage 10.

On crabote le baladeur 53 sur le pignon 50 et le baladeur 63 sur le pignon 62.

L'entraînement se fait à partir du moteur électrique 2 par l'intermédiaire de l'arbre 4, des pignons 40-60, du pignon de sortie 62 et de la couronne 72 du différentiel 7.

Ceci correspond à la première vitesse électrique, le moteur thermique étant inactif.

On pilote ensuite l'activation de l'embrayage 10, et le couple développé par le moteur thermique s'ajoute alors à celui du moteur électrique, pour l'entraînement du différentiel 7.

Cet entraînement se fait comme précédemment pour la voie électrique.

Pour la voie thermique, il est réalisé à partir du moteur 1 via les pignons 30-50, ainsi que le pignon 62 et la couronne 72.

A partir d'une certaine vitesse du véhicule, par exemple de l'ordre de 40 km/h, on change le rapport des vitesses thermiques, en crabotant le baladeur 53 sur le pignon 51.

Ceci correspond à la seconde vitesse thermique.

A partir d'une autre valeur de vitesse, par exemple de l'ordre de 80 km/h, on revient au crabotage initial du baladeur 53, qui rend actif le pignon 50 (en lieu et place du pignon 51), mais on crabote l'autre baladeur 63 sur le pignon de sortie 61 (en lieu et place du pignon 62).

L'entraînement du différentiel 7 se fait alors par la couronne plus petite 71, ce qui correspond à une vitesse plus grande.

Ceci correspond à la combinaison de la seconde vitesse électrique avec la troisième vitesse thermique.

Enfin, au-delà d'une autre valeur de vitesse, par exemple de 120 km/h, on crabote le baladeur 53 sur le pignon 51 tout en maintenant l'autre baladeur (63) craboté sur le pignon 61.

Ceci correspond à la combinaison de la seconde vitesse électrique avec la quatrième vitesse thermique.

En phase de ralentissement, le passage des différentes vitesses est réalisé dans l'ordre inverse.

Le débrayage du mécanisme 10 peut se faire un peu avant l'arrêt du véhicule, afin d'amener le moteur thermique à une vitesse nulle avant l'arrêt complet du véhicule.

Le mode de réalisation qui vient d'être décrit possède quatre vitesses thermiques et deux vitesses électriques.

Il va de soi que l'invention ne se limite pas à cet arrangement particulier.

Par ailleurs, on notera que les pignons de commande de la marche arrière, qui peuvent être de type classique, n'ont pas été représentés sur les dessins afin de pas les compliquer inutilement.

## Revendications

1. Boîte de vitesses mécanique en ligne, pour véhicule à propulsion hybride avec deux types de moteur, la propulsion étant réalisée à partir d'un moteur thermique (1) et/ou d'un moteur électrique (2), qui comporté des lignes primaire (**XX'**) et secondaire (**YY'**) parallèles, à savoir une ligne primaire (**XX'**) motrice et une ligne secondaire (**YY'**) réceptrice du mouvement, laquelle entraîne un différentiel (7) qui commande les roues motrices du véhicule, **caractérisée par le fait que** :
- la ligne primaire (**XX'**) est constituée d'un arbre menant principal (3) entraîné en rotation par le moteur thermique (1) via un embrayage (10) et d'un arbre menant auxiliaire tubulaire (4) qui entoure coaxialement l'arbre menant principal (3) et qui est entraîné par le moteur électrique (2), ces deux arbres (3, 4) étant mutuellement libres en rotation ;
- l'arbre menant principal (3) porte au moins une paire de pignons (30, 31) de diamètres différents, dont il est solidaire en rotation ;
- l'arbre menant auxiliaire (4) porte un pignon (40) dont il est solidaire en rotation ;
- la ligne secondaire (**YY'**) comprend un arbre mené (5) qui, d'une part, porte un pignon (60) dont il est solidaire en rotation et qui est en prise avec ledit pignon (40) de l'arbre menant auxiliaire, d'autre part, porte une première paire de pignons fous (50, 51) qui sont chacun en prise avec l'un des pignons (30, 31) de l'arbre menant principal (3), un baladeur (53) permettant de solidariser sélectivement en rotation l'un de ces pignons fous (50, 51) avec l'arbre mené, ainsi qu'une seconde paire de pignons fous (61, 62), dits pignons de sortie, de diamètres différents ;
- le différentiel (7) comporte deux couronnes (71, 72) de diamètres différents, qui sont en prise chacune avec l'un desdits pignons de sortie (61, 62), un baladeur (63) permettant de solidariser sélectivement l'un des deux pignons de sortie (61, 62) avec ledit arbre mené (5).

2. Boîte de vitesses selon la revendication 1, **caractérisée par le fait que** le pignon (60) porté par l'arbre mené (5) est disposé entre les deux paires de pignons fous (50-51 ; 61-62).

## Patentansprüche

1. Mechanisches Schaltgetriebe für ein Hybridfahrzeug, das mit zwei Arten von Motoren ausgerüstet ist, wobei der Antrieb mit Hilfe einer Verbrennungs-Kraftmaschine (1) und/oder einem Elektromotor hergestellt wird, der parallele primäre Linien (**XX'**) und sekundäre Linien (**YY'**) enthält, das heißt, eine primäre Antriebslinie (**XX'**) und eine sekundäre Linie (**YY'**) für die Aufnahme der Bewegung, die ein Differential (7) antreibt, das die Antriebsräder des Fahrzeugs steuert,
**dadurch gekennzeichnet, dass**
- die primäre Linie (**XX'**) aus einer Hauptantriebswelle (3) besteht, welche durch den Verbrennungsmotor (1) mit Hilfe einer Kupplung (10) und einer rohrförmigen Hilfsantriebswelle (4) gedreht wird, welche koaxial um die Hauptantriebswelle (3) angeordnet ist, und von dem Elektromotor (2) angetrieben wird, wobei sich die beiden Wellen (3, 4) untereinander frei drehen können;
- die Hauptantriebswelle (3) mindestens ein Paar Zahnräder (30, 31) mit unterschiedlichem Durchmesser trägt, mit denen sie drehfest verbunden ist;
- die Hilfsantriebswelle (4) mit einem Zahnrad (40) ausgestattet ist, mit dem sie drehfest verbunden ist;
- die sekundäre Linie (**YY'**) eine Antriebswelle (5) enthält, die einerseits ein Zahnrad (60) trägt, mit dem sie drehfest verbunden ist und das mit dem Zahnrad (40) der Hilfsantriebswelle im Eingriff steht, und andererseits ein erstes Paar Losritzel (50, 51) trägt, die jeweils mit einem der Zahnräder (30, 31) der Hauptwelle (3) im Eingriff stehen, sowie eine Schubgabel (53) enthält, mit deren Hilfe wahlweise eines der Losritzel (50, 51) mit der Antriebswelle drehfest verbunden werden kann, sowie ein zweites Paar Losritzel (61, 62), die sogenannten Abtriebsritzel, mit unterschiedlichem Durchmesser enthält;
- das Differential (7) zwei Ringe (71, 72) mit unterschiedlichem Durchmesser aufweist, die jeweils mit einem der Abtriebsritzel (61, 62) im Eingriff stehen, wobei mit Hilfe einer Schubgabel (63) wahlweise eines der beiden Abtriebsritzel (61, 62) mit der Antriebswelle (5) verbunden werden kann.

2. Schaltgetriebe nach Anspruch 1,
**dadurch gekennzeichnet, dass**
das von der Antriebswelle (5) getragene Zahnrad (60) zwischen den paarweise angeordneten Losritzeln (50 - 51; 61 - 62) angeordnet ist.

## Claims

1. An in-line mechanical gear box for a vehicle with hybrid propulsion having two types of motive power, propulsion being provided by a combustion engine (1) and/or an electric motor (2), the gear box comprising parallel primary and secondary lines (XX', YY'), namely an input primary line (XX') and an output secondary line (YY'), which output line drives a differential (7) controlling the driving wheels of the vehicle, the gear box being **characterized by** the facts that:
the primary line (XX') is constituted by a main drive shaft (3) driven by the engine (1) via a clutch (10) and an auxiliary drive shaft (4) that is tubular, surrounding the main drive shaft (3) coaxially and driven by the electric motor (2), these two shafts (3, 4) being free to rotate relative to each other;
· the main drive shaft (3) carries at least one pair of gearwheels (30, 31) of different diameters, and constrained to rotate therewith;
· the auxiliary drive shaft (4) carries a gearwheel (40) with which it is constrained to rotate;
· the secondary line (YY') comprises a driven shaft (5) which firstly carries a gearwheel (60) with which it is constrained to rotate and which meshes with said gearwheel (40) of the auxiliary drive shaft, and secondly carries both a first pair of gearwheels (50, 51) mounted loose, each meshing with a respective one of the gearwheels (30, 31) of the main drive shaft (3), a sliding shaft (53) enabling a selected one of the loose gearwheels (50, 51) to be constrained to rotate together with the driven shaft, and an "outlet", second pair of gearwheels (61, 62) mounted loose and of different diameters; and
- the differential (7) has two rings (71, 72) of different diameters each meshing with a respective one of said outlet gearwheels (61, 62), a sliding shaft (63) enabling a selected one of the two outlet gearwheels (61, 62) to be constrained to rotate with said driven shaft (5).

2. A gear box according to claim 1, **characterized by** the fact that the gear wheel (60) carried by the driven shaft (5) is placed between the two pairs of gearwheels (50-51; 61-62) that are mounted loose.
